# EUROPEAN PATENT SPECIFICATION

(11) **EP 3 667 079 B1**
(45) Date of publication and mention of the grant of the patent: **23.02.2022**
(21) Application number: 19214321.2
(22) Date of filing: 09.12.2019
(51) Int. Cl.: F03D 13/20, E04H 12/08, E04H 12/12, E04H 12/34

(54) **HYBRID WIND POWER TOWER BASED ON EDGE-STIFFENED COMBINED SHELLS**
HYBRIDER WINDKRAFTTURM AUF BASIS VON KANTENVERSTEIFTEN KOMBINIERTEN SCHALEN
TOUR D'ÉOLIENNE HYBRIDE BASÉE SUR DES COQUES COMBINÉES À BORDS RENFORCÉS

(30) Priority: 10.12.2018 CN 201811504132
(43) Date of publication of application: 17.06.2020
(73) Proprietor: Chongqing University, Shapingba, Chongqing 400044 (CN)
(72) Inventor: ZHOU, Xuhong, Chongqing, 400044 (CN); WANG, Yuhang, Chongqing, 400044 (CN); DENG, Ran, Chongqing, 400044 (CN)
(74) Representative: Huang, Liwei

(56) References cited:
- EP-A1- 1 606 514
- CN-U- 209 398 541
- KR-A- 20180 071 131

## Description

### TECHNICAL FIELD

The present application relates to the technical field of wind power generation.

### BACKGROUND

Wind power energy is pollution-free and renewable clean energy. Wind power farms have been widely used in recent years due to high power production, stable fan operation and mature manufacturing technology.

With the increasing demand for wind power energy, high-power and high-tower wind turbines become popular. Conventional wind turbines mostly use pure steel towers. In order to meet the requirements for stability, strength and fatigue, the towers are generally large in diameter and wall thickness, resulting in material waste, difficult construction and inconvenient transportation. Therefore, it is necessary to develop a novel combined tower that is safe, reliable, convenient for construction and transportation, and low in cost. A prior art document describing a combined wind turbine tower is KR 2018 0071131 A.

### SUMMARY

The present application provides a hybrid wind power tower based on edge-stiffened combined shells. An upper part of the system is a pure steel tower, while a lower part thereof is a combined tower. The combined tower is formed by assembling 2 to 8 edge-stiffened combined shells in a circumferential direction, and is assembled in segments in a vertical direction. Each of the edge-stiffened combined shells consists of a hollow concrete-filled steel tube structure, and external plates, internal plates and stiffening plates arranged around the hollow concrete-filled steel tube structure. The system gives full play to the advantages of the combined structure, and is reasonable in stress form and reliable in connection. All members can be prefabricated in advance and assembled on site. The system is high in construction efficiency, low in material consumption and convenient to transport and has a promising prospect in engineering applications.

The technical solution of the present application will be described below.

A hybrid wind power tower based on edge-stiffened combined shells is provided, which relates to the technical field of wind power generation, wherein the system includes a pure steel tower, a combined tower, edge-stiffened combined shells, a hollow concrete-filled steel tube structure, outer steel tubes, inner steel tubes, concrete, external plates, internal plates, stiffening plates, bolts, flange plates, studs, angle steel and T-shaped steel. An upper part of the system is the pure steel tower while a lower part thereof is the combined tower, and the pure steel tower and the combined tower are connected by the flange plates and the bolts. The combined tower is formed by assembling a plurality of edge-stiffened combined shells.

The combined tower is formed by assembling 2 to 8 edge-stiffened combined shells in a circumferential direction, and is assembled in segments in a vertical direction. The edge-stiffened combined shells are prefabricated in a factory and each consist of a hollow concrete-filled steel tube structure, and external plates, internal plates and stiffening plates arranged around the hollow concrete-filled steel tube structure. Adjacent edge-stiffened combined shells are connected by the bolts.

The hollow concrete-filled steel tube structure consists of an outer steel tube, an inner steel tube and concrete, with both the cross section of the outer steel tube and the cross section of the inner steel tube gradually decreasing from the bottom up. On an inner side of the outer steel tube and an outer side of the inner steel tube, the studs, the angle steel, the T-shaped steel or a combination thereof are welded in advance at certain intervals, and the concrete is then poured. The concrete may be ordinary concrete or lightweight aggregate concrete.

The internal plates are welded on upper, lower, left and right sides of the hollow concrete-filled steel tube structure, the periphery of the outer steel tube is extended outward by a certain distance and then welded with the external plates, and bolt holes are reserved on the external plates. A certain number of stiffening plates are uniformly arranged between the external plates and the internal plates to form a peripheral edge-stiffened region.

Compared with the prior art, the present application has the following beneficial effects.
(1) All members can be prefabricated in a factory and directly assembled on site, so it is convenient for construction and the production efficiency is high.
(2) The tower is assembled in blocks and in segments, so it is convenient for transportation and stacking on site.
(3) By using the hollow concrete-filled steel tube structure, the tower has the following obvious advantages when compared with the conventional pure steel towers: high stiffness in the cross section, high stability and low material consumption. Moreover, the use of the lightweight aggregate concrete results in light weight, so the cost for transportation and hoisting of prefabricated members can be saved.
(4) In an innovative connection way, the tower is reasonable in force transfer, reliable in connection, simple in construction and convenient for large-scale application and popularization.

### BRIEF DESCRIPTION OF THE DRAWINGS

Fig. 1 is an overall schematic view of the present application;
Fig. 2 is a schematic sectional view of the body of the combined tower according to the present application;
Fig. 3 is a schematic view of the edge-stiffened combined shell according to the present application, including three-dimensional overall view and detailed view of the interior;
Fig. 4 is a schematic view of the hollow concrete-filled steel tube structure, for the purpose of instability prevention, according to the present application; and
Fig. 5 is a schematic view of the connection between the pure steel tower and the combined tower according to the present application;
   in which:
   1: pure steel tower; 2: combined tower; 3: edge-stiffened combined shell; 4: hollow concrete-filled steel tube structure; 5: outer steel tube; 6: inner steel tube; 7: concrete; 8: external plate; 9: internal plate; 10: stiffening plate; 11: bolt; 12: flange plate; 13: stud; 14: angle steel; and 15: T-shaped steel.

### DETAILED DESCRIPTION

The present application will be further described below with reference to the accompanying drawings.

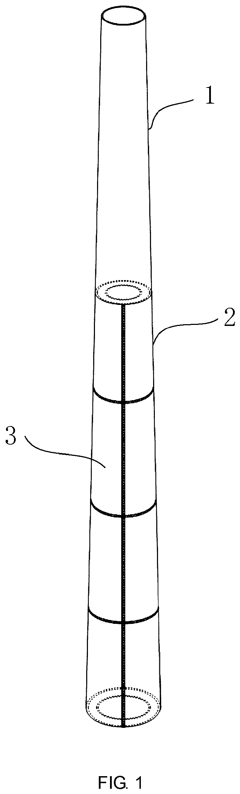

As shown in Fig. 1, a hybrid wind power tower based on edge-stiffened combined shells is provided. An upper part of the system is a pure steel tower 1, while a lower part thereof is a combined tower 2. The combined tower 2 is formed by assembling a plurality of edge-stiffened combined shells 3.

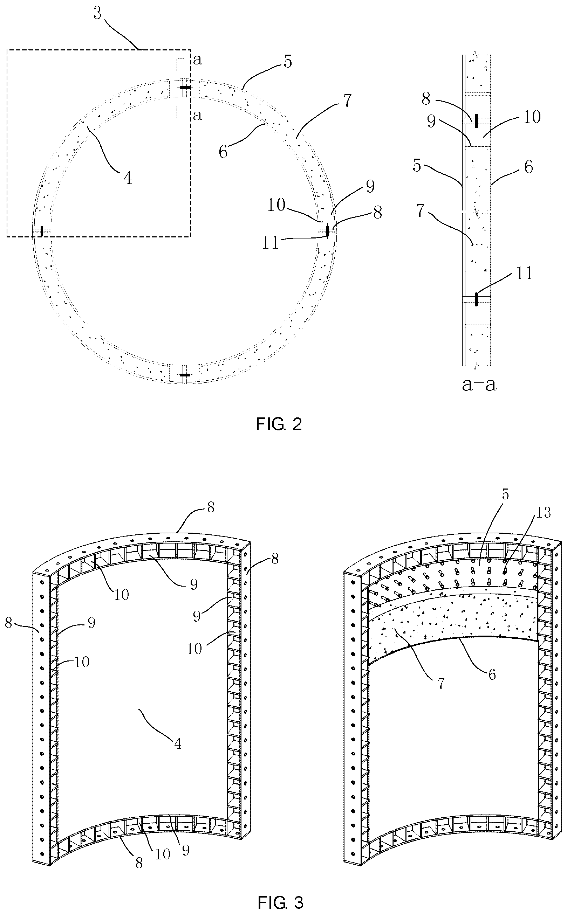

As shown in Fig. 2, the combined tower 2 is formed by assembling 2 to 8 (4, in this figure as an example) edge-stiffened combined shells 3 in a circumferential direction, and is assembled in segments in a vertical direction. The edge-stiffened combined shells 3 are prefabricated in a factory and each consist of a hollow concrete-filled steel tube structure 4, and external plates 8, internal plates 9 and stiffening plates 10 arranged around the hollow concrete-filled steel tube structure 4. Adjacent edge-stiffened combined shells 3 are connected by the bolts 11.

As shown in Fig. 3, the internal plates 9 are welded on upper, lower, left and right sides of the hollow concrete-filled steel tube structure 4. The periphery of the outer steel tube 5 is extended outward by a certain distance and then welded with the external plates 8, and bolt holes are reserved on the external plates 8. A certain number of stiffening plates 10 are uniformly arranged between the external plates 8 and the internal plates 9 to form a peripheral edge-stiffened region.

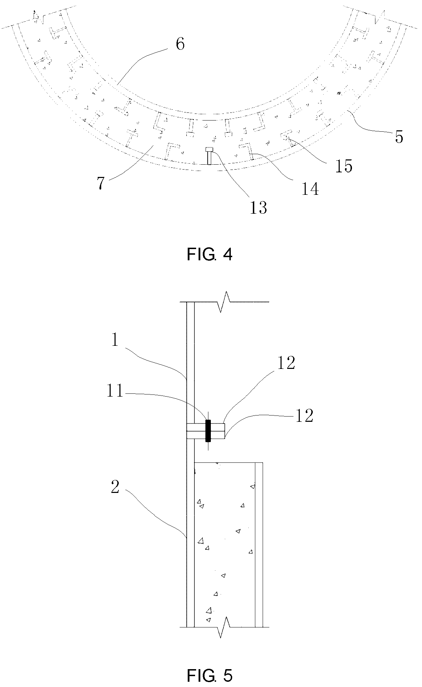

As shown in Fig. 4, the hollow concrete-filled steel tube structure 4 consists of an outer steel tube 5, an inner steel tube 6 and concrete 7, with both the cross section of the outer steel tube 5 and the cross section of the inner steel tube 6 gradually decreasing from the bottom up. On an inner side of the outer steel tube 5 and an outer side of the inner steel tube 6, the studs 13, the angle steel 14, the T-shaped steel 15 or a combination thereof are welded in advance at certain intervals, and the concrete 7 is then poured. The concrete 7 can be ordinary concrete or lightweight aggregate concrete.

As shown in Fig. 5, the pure steel tower 1 in the upper part and the combined tower 2 in the lower part are connected by the flange plates 12 and the bolts 11.

The present application provides a hybrid wind power tower based on edge-stiffened combined shells. The system gives full play to the advantages of the combined structure, and is reasonable in stress form and reliable in connection. All members can be prefabricated in advance and assembled on site. The system is high in construction efficiency, low in material consumption and convenient to transport, and has a promising prospect in engineering applications.

The foregoing description merely shows the preferred implementations of the present application, and the present application is not limited to the specific implementations described above. A person of ordinary skill in the art can make various modifications or supplements to the implementations or replace the implementations , wherein the scope of protection is defined by the appended claims.

Although the terms (such as, 1: pure steel tower; 2: combined tower; 3: edge-stiffened combined shell; 4: hollow concrete-filled steel tube structure; 5: outer steel tube; 6: inner steel tube; 7: concrete; 8: external plate; 9: internal plate; 10: stiffening plate; 11: bolt; 12: flange plate; 13: stud; 14: angle steel; and, 15: T-shaped steel) have been frequently used herein, other terms are also possible.

## Claims

1. A hybrid wind power tower based on edge-stiffened combined shells, wherein the hybrid wind power tower comprises a pure steel tower (1), a combined tower (2), bolts (11), flange plates (12), studs (13), angle steel (14) and T-shaped steel (15); an upper part of the hybrid wind power tower is the pure steel tower (1) while a lower part thereof is the combined tower (2), and the pure steel tower (1) and the combined tower (2) are connected by the flange plates (12) and the bolts (11);
wherein the combined tower (2) is formed by assembling 2 to 8 edge-stiffened combined shells (3) in a circumferential direction, and is assembled in segments in a vertical direction; each of the edge-stiffened combined shells (3) consists of a hollow concrete-filled steel tube structure (4), and external plates (8), internal plates (9) and stiffening plates (10) arranged around the hollow concrete-filled steel tube structure (4); and, adjacent edge-stiffened combined shells (3) are connected by the bolts (11);
wherein the hollow concrete-filled steel tube structure (4) consists of an outer steel tube (5), an inner steel tube (6) and concrete (7),
wherein the internal plates (9) are welded on upper, lower, left and right sides of the hollow concrete-filled steel tube structure (4); the periphery of the outer steel tube (5) is extended outward by a certain distance and then welded with the external plates (8), and bolt holes are reserved on the external plates (8); and, a certain number of stiffening plates (10) are uniformly arranged between the external plates (8) and the internal plates (9) to form a peripheral edge-stiffened region.

2. The hybrid wind power tower based on edge-stiffened combined shells according to claim 1, wherein, in the hollow concrete-filled steel tube structure, both the cross section of the outer steel tube (5) and the cross section of the inner steel tube (6) gradually decrease from the bottom up; on an inner side of the outer steel tube (5) and an outer side of the inner steel tube (6), the studs (13), the angle steel (14), the T-shaped steel (15) or a combination thereof are welded at certain intervals.

## Patentansprüche

1. Hybrid-Windkraftturm auf Basis randversteifter kombinierter Schalen, wobei der Hybrid-Windkraftturm einen reinen Stahlturm (1), einen kombinierten Turm (2), Bolzen (11), Flanschplatten (12), Stehbolzen (13), Winkelstahl (14) und T-förmigen Stahl (15) umfasst; ein oberer Teil des Hybrid-Windkraftturms der reine Stahlturm (1) ist, während ein unterer Teil davon der kombinierte Turm (2) ist und der reine Stahlturm (1) und der kombinierte Turm (2) durch die Flanschplatten (12) und die Bolzen (11) verbunden sind;
wobei der kombinierte Turm (2) durch Zusammenbauen von 2 bis 8 randversteiften kombinierten Schalen (3) in einer Umfangsrichtung gebildet wird und in Segmenten in einer vertikalen Richtung zusammengebaut wird; jede der randversteiften kombinierten Schalen (3) aus einer hohlen betongefüllten Stahlrohrkonstruktion (4) und um die hohle betongefüllte Stahlrohrkonstruktion (4) angeordneten Außenplatten (8), Innenplatten (9) und Versteifungsplatten (10) besteht; und benachbarte randversteifte kombinierte Schalen (3) durch die Bolzen (11) verbunden sind;
wobei die hohle betongefüllte Stahlrohrkonstruktion (4) aus einem äußeren Stahlrohr (5), einem inneren Stahlrohr (6) und Beton (7) besteht,
wobei die Innenplatten (9) an der oberen, unteren, linken und rechten Seite der hohlen betongefüllten Stahlrohrkonstruktion (4) angeschweißt sind; der Umfang des äußeren Stahlrohrs (5) um eine gewisse Distanz nach außen verlängert wird und dann mit den Außenplatten (8) verschweißt wird und Bolzenlöcher an den Außenplatten (8) reserviert sind; und eine bestimmte Anzahl von Versteifungsplatten (10) gleichmäßig zwischen den Außenplatten (8) und den Innenplatten (9) angeordnet ist, um einen umlaufenden randversteiften Bereich zu bilden.

2. Hybrid-Windkraftturm auf Basis randversteifter kombinierter Schalen nach Anspruch 1, wobei bei der hohlen betongefüllten Stahlrohrkonstruktion sowohl der Querschnitt des äußeren Stahlrohres (5) als auch der Querschnitt des inneren Stahlrohres (6) allmählich von unten nach oben abnehmen; an einer Innenseite des äußeren Stahlrohrs (5) und einer Außenseite des inneren Stahlrohrs (6) die Stehbolzen (13), der Winkelstahl (14), der T-förmige Stahl (15) oder eine Kombination davon in bestimmten Abständen geschweißt werden.

## Revendications

1. Tour éolienne hybride basée sur des coques combinées à bords raidis, dans laquelle la tour éolienne hybride comprend une tour en acier pur (1), une tour combinée (2), des boulons (11), des plaques de bride (12), des goujons (13), de l'acier d'angle (14) et de l'acier en forme de T (15) ; une partie supérieure de la tour éolienne hybride est la tour en acier pur (1) tandis qu'une partie inférieure de celle-ci est la tour combinée (2), et la tour en acier pur (1) et la tour combinée (2) sont raccordées par les plaques de bride (12) et les boulons (11) ;
dans laquelle la tour combinée (2) est formée en assemblant 2 à 8 coques combinées à bords raidis (3) dans une direction circonférentielle, et est assemblée en segments dans une direction verticale ; chacune des coques combinées à bords raidis (3) se compose d'une structure tubulaire en acier creuse remplie de béton (4), et de plaques externes (8), de plaques internes (9) et de plaques de raidissement (10) disposées autour de la structure tubulaire en acier creuse remplie de béton (4) ; et des coques combinées adjacentes à bords raidis (3) sont raccordées par les boulons (11) ;
dans lequel la structure tubulaire en acier creuse remplie de béton (4) se compose d'un tube extérieur en acier (5), d'un tube intérieur en acier (6) et de béton (7),
dans lequel les plaques internes (9) sont soudées sur les côtés supérieur, inférieur, gauche et droit de la structure tubulaire en acier creuse remplie de béton (4) ; la périphérie du tube extérieur en acier (5) est prolongée vers l'extérieur d'une certaine distance puis soudée avec les plaques externes (8), et des trous de boulons sont réservés sur les plaques externes (8) ; et, un certain nombre de plaques de raidissement (10) sont disposées uniformément entre les plaques externes (8) et les plaques internes (9) pour former une région périphérique à bords raidis.

2. Tour éolienne hybride basée sur des coques combinées à bords raidis selon la revendication 1, dans laquelle, dans la structure tubulaire en acier creuse remplie de béton, à la fois la section transversale du tube extérieur en acier (5) et la section transversale du tube intérieur en acier (6) diminuent progressivement de bas en haut ; sur un côté intérieur du tube extérieur en acier (5) et un côté extérieur du tube intérieur en acier (6), les goujons (13), l'acier d'angle (14), l'acier en forme de T (15) ou une combinaison de ceux-ci sont soudés à certains intervalles.
